# FASCICULE DE BREVET EUROPEEN

(11) **EP 0 865 818 B1**
(45) Date de publication et mention de la délivrance du brevet: **06.02.2002**
(21) Numéro de dépôt: 98400504.1
(22) Date de dépôt: 03.03.1998
(51) Int. Cl.: B01J 8/02

(54) **Réacteur catalytique à plaques**
Plattenreaktor für katalytische Reaktion
Plate-type reactor for catalytic reaction

(30) Priorité: 17.03.1997 FR 9703206
(43) Date de publication de la demande: 23.09.1998
(73) Titulaire: PACKINOX, 92084 Paris La Défense (FR)
(72) Inventeur: Girod, Christine, 78230 Le Pecq (FR); Sabin, Dominique, 78580 Herbeville (FR)
(74) Mandataire: Lanceplaine, Jean-Claude

(56) Documents cités:
- EP-A- 0 292 736
- EP-A- 0 529 329
- US-A- 3 860 065
- US-A- 5 584 341
- PATENT ABSTRACTS OF JAPAN vol. 006, no. 054 (C-097), 9 avril 1982 & JP 56 166937 A (OSAKA GAS CO LTD), 22 décembre 1981,

## Description

La présente invention a pour objet un réacteur catalytique, du type comprenant un faisceau de plaques d'échange thermique entre des fluides dont l'un est formé de plusieurs composants présentant des risques, notamment d'explosion lorsqu'ils sont mélangés.

En effet, on sait que pour la production de certains fluides, comme par exemple de l'anhydride phtalique, tout d'abord on mélange de l'air et l'ortho-xylène pour réaliser un fluide principal, puis on fait circuler ce fluide principal dans un réacteur catalytique en présence d'un fluide secondaire pour réaliser un échange thermique entre ces fluides.

Or, le mélange d'air et d'ortho-xylène génère une explosion sous certaines conditions de proportion, de pression et de température.

Jusqu'à présent, on utilise des réacteurs catalytique formés d'une multitude de tubes disposés dans une calandre.

Les tubes sont remplis d'un catalyseur et le fluide principal composé d'air et d'ortho-xylène circule à l'intérieur de ces tubes, tandis que le fluide secondaire circule dans la calandre.

Pour éviter le risque d'explosion, la proportion d'ortho-xylène dans l'air est réduite pour ne pas atteindre les conditions d'explosion si bien que le rendement de la réaction chimique est limité.

Néanmoins, le réacteur catalytique est équipé d'une soupape de sécurité.

C'est également le cas pour d'autres fluides comme par exemple le toluène et l'air.

L'invention a pour but d'éviter ces inconvénients en proposant un réacteur catalytique à plaques permettant d'augmenter la concentration de l'un des composants du fluide principal sans aucun risque d'explosion et par conséquent, d'augmenter de façon significative le rendement général de l'installation.

L'invention a donc pour objet un réacteur catalytique, du type comprenant un faisceau de plaques d'échange thermique délimitant un premier circuit comportant au moins une zone d'entrée et de sortie d'un fluide principal formé d'au moins deux composants et un second circuit comportant au moins une zone d'entrée et de sortie d'un fluide secondaire, des moyens d'admission et d'évacuation du fluide principal et des moyens d'admission et d'évacuation du fluide secondaire, caractérisé en ce que les moyens d'admission du fluide principal dans le premier circuit sont formés, d'une part, par au moins un collecteur rempli de particules chimiquement neutres et couvrant ladite zone d'entrée et, d'autre part, par au moins une rampe d'injection pour chaque composant du fluide principal, s'étendant sur toute la longueur du collecteur et comportant au moins une rangée longitudinale d'orifices débouchant dans le collecteur et dirigés vers ladite zone d'entrée.

Selon d'autres caractéristiques de l'invention :
- les moyens d'évacuation du fluide principal du premier circuit sont formés par au moins un collecteur couvrant ladite zone de sortie dudit fluide principal,
- la circulation du fluide principal et du fluide secondaire dans les circuits correspondants est co-courante, à contre-courant ou à courants croisés,
- le premier circuit comporte plusieurs zones d'entrée et de sortie du fluide principal et le second circuit comporte plusieurs zones d'entrée et de sortie du fluide secondaire alternées respectivement avec lesdites zones d'entrée et de sortie du fluide principal,
- le premier circuit comporte plusieurs zones d'entrée et de sortie du fluide principal et le second circuit comporte plusieurs zones d'entrée et de sortie du fluide secondaire alternées respectivement avec les zones d'entrée et de sortie du fluide principal, les zones de sortie du fluide principal et les zones de sortie du fluide secondaire étant inversées par rapport aux zones d'entrée dudit fluide principal et aux zones d'entrée dudit fluide secondaire,
- les moyens d'admission du fluide principal dans le premier circuit sont formés, pour chaque zone d'entrée, d'une part, par un collecteur rempli de particules chimiquement neutres et couvrant la zone d'entrée correspondante et, d'autre part, par au moins une rampe d'injection pour chaque composant du fluide principal s'étendant sur toute la longueur du collecteur et comportant au moins une rangée longitudinale d'orifices débouchant dans le collecteur et dirigés vers ladite zone d'entrée,
- les moyens d'évacuation du fluide principal sont formés par un collecteur couvrant chaque zone de sortie du premier circuit,
- les moyens d'admission du fluide secondaire dans le second circuit sont formés, pour chaque zone d'entrée, par un collecteur couvrant la zone d'entrée correspondante ou par un collecteur couvrant l'ensemble des zones d'entrée dudit fluide secondaire,
- les moyens d'évacuation du fluide secondaire du second circuit sont formés, pour chaque zone de sortie, par un collecteur couvrant la zone de sortie correspondante ou par un collecteur couvrant l'ensemble des zones de sortie dudit fluide secondaire,
- les rampes d'injection sont disposées à l'intérieur du collecteur correspondant ou à la périphérique dudit collecteur,
- les rampes d'injection sont formées par des tubes de même diamètre ou de diamètres différents,
- les orifices des rampes d'injection sont de même diamètre ou de diamètres différents,
- l'espacement des orifices sur les rampes d'injection est constant ou variable.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un mode de réalisation du faisceau de plaques d'un réacteur catalytique conforme à l'invention,
- la Fig. 2 est une vue schématique en perspective d'un réacteur catalytique conforme à l'invention,
- la Fig.3 est une vue schématique en coupe transversale des moyens d'alimentation en fluide principal du réacteur catalytique,
- la Fig. 4 est une vue schématique en perspective d'une variante des moyens d'alimentation en fluide principal du réacteur catalytique,
- la Fig. 5 est une vue schématique en perspective d'une rampe d'injection,
- la Fig. 6 est une vue en élévation d'un second mode de réalisation du réacteur catalytique conforme à l'invention,
- la Fig. 7 est une vue en élévation d'un troisième mode de réalisation du réacteur catalytique conforme à l'invention.

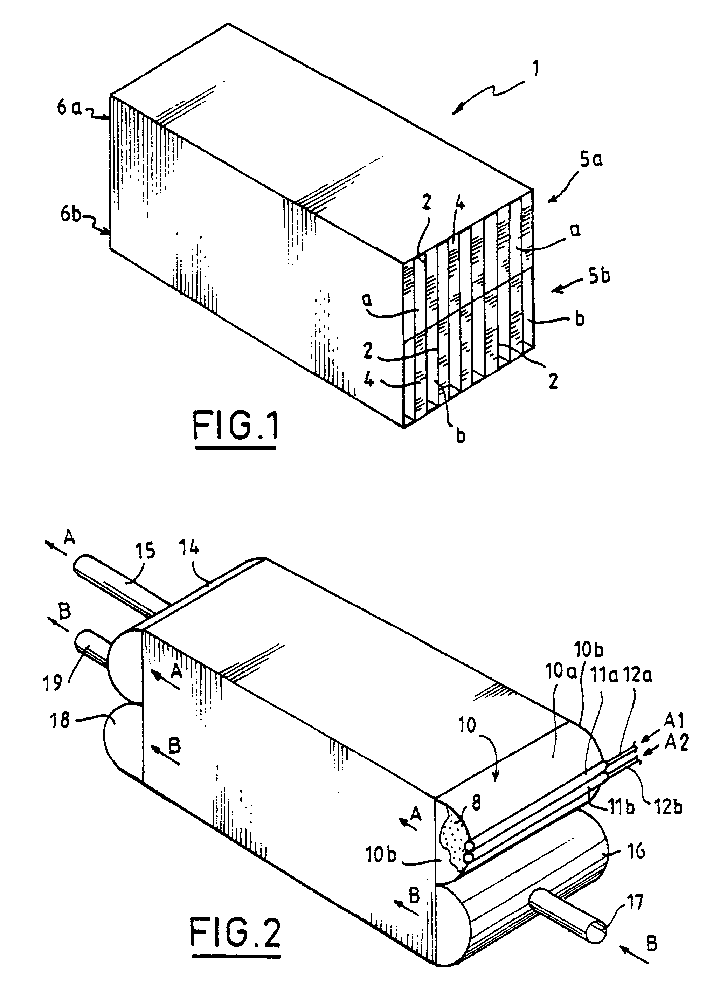

Sur la Fig. 1, on a représenté schématiquement un faisceau de plaques 1 d'échange thermique entre deux fluides, un fluide principal A et un fluide secondaire B pour un réacteur catalytique.

Le fluide principal A est formé de deux composants A1 et A2 présentant des risques d'explosion lorsqu'ils sont mélangés sous certaines conditions de proportion, de pression et de température.

C'est le cas par exemple de l'air et de l'ortho-xylène pour la production d'anhydride phtalique ou de l'air et du toluène.

Dans un but de simplification, la description qui suit sera limitée à un fluide principal formé de deux composants, ce fluide principal pouvant être formé de plus de deux composants.

Ainsi que représenté à la Fig. 1, le faisceau de plaques 1 se compose d'un empilement de plaques 2 métalliques de faible épaisseur et parallèles les unes aux autres.

Chaque plaque 2 est constituée d'une tôle fine, le plus souvent en acier inoxydable ou tout autre matériau suffisamment ductile.

Chaque plaque 2 comporte des bords longitudinaux et transversaux à surface lisse et une partie centrale munie d'ondulations non représentées.

Les plaques 2 définissent entre elles des intervalles, un intervalle sur deux forme un premier circuit a longitudinal pour le fluide principal A et les autres intervalles forment un second circuit b longitudinal pour le fluide secondaire B, lesdits circuits a et b s'étendant sur toute la longueur du faisceau de plaques 1 et sur toute la surface des plaques 2.

Les circuits a et b sont indépendants.

Dans l'exemple de réalisation représenté sur les figures, la circulation du fluide principal A et du fluide secondaire B dans les circuits correspondants a et b est co-courante, c'est à dire que les fluides A et B circulent dans le même sens dans les circuits du faisceau de plaques 1.

Mais, la circulation du fluide principal A et du fluide secondaire B, dans les circuits a et b peut être à contre-courant ou à courants croisés.

Dans l'exemple de réalisation représenté à la Fig. 1, le faisceau de plaques 1 comporte, à l'une de ses extrémités, une zone d'entrée 5a pour le fluide principal A et une zone d'entrée 5b pour le fluide secondaire B et, à l'autre de ses extrémités, une zone de sortie 6a pour le fluide principal A et une zone de sortie 6b pour le fluide secondaire B.

Pour cela, les ouvertures d'un intervalle sur deux du circuit a sont fermées par des organes d'obturation 4 dans les zones d'entrée et de sortie, respectivement 5a et 6a, et les ouvertures des autres intervalles formant le circuit b sont fermés par des organes d'obturation 4 dans les zones d'entrée et de sortie, respectivement 5b et 6b.

La répartition des ouvertures libres et des ouvertures fermées représentées sur l'une des extrémités du faisceau de plaques 1 à la Fig. 1 est identique sur l'autre extrémité du faisceau de plaques 1 de façon à former deux circuits indépendants.

Les organes d'obturation 4 sont formés, par exemple, par des languettes soudées sur les bords des plaques 2 correspondantes ou par des rebords rabattus des plaques 2 et dont les extrémités libres sont soudées entre elles.

Le réacteur catalytique comporte également des moyens d'admission et d'évacuation du fluide principal A dans le premier circuit a et des moyens d'admission et d'évacuation du fluide secondaire B dans le second circuit b. Ces moyens d'admission et d'évacuation sont rapportés sur les zones d'entrée et de sortie du fluide correspondant du faisceau de plaques 1.

En se reportant à la Fig.2, on va maintenant décrire les moyens d'admission et d'évacuation des fluides A et B dans le cas où le faisceau de plaques est pourvu d'une zone d'entrée 5a et d'une zone de sortie 6a pour le fluide principal A et d'une zone d'entrée 5b et d'une zone de sortie 6b pour le fluide secondaire B.

Les moyens d'admission du fluide principal A dans le premier circuit a sont formés par un collecteur 10 comportant une paroi centrale 10a et deux parois latérales 10b.

Ce collecteur 10 couvre la zone d'entrée 5a du premier circuit a et est rempli de particules chimiquement neutre 8.

Pour éviter que les particules 8 se dispersent dans les canaux formant le circuit a, la zone d'entrée 5a est recouverte d'une grille, non représentée.

D'autre part, les moyens d'admission du fluide principal A comprennent également une première rampe d'injection 11a pour le composant A1 du fluide principal A et une seconde rampe d'injection 11b pour l'autre composant A2 de ce fluide principal A.

Les rampes d'injection 11a et 11b s'étendent sur toute la longueur du collecteur 10 et sont reliées chacune à un conduit 12a et 12b d'alimentation du composant correspondant du fluide principal A.

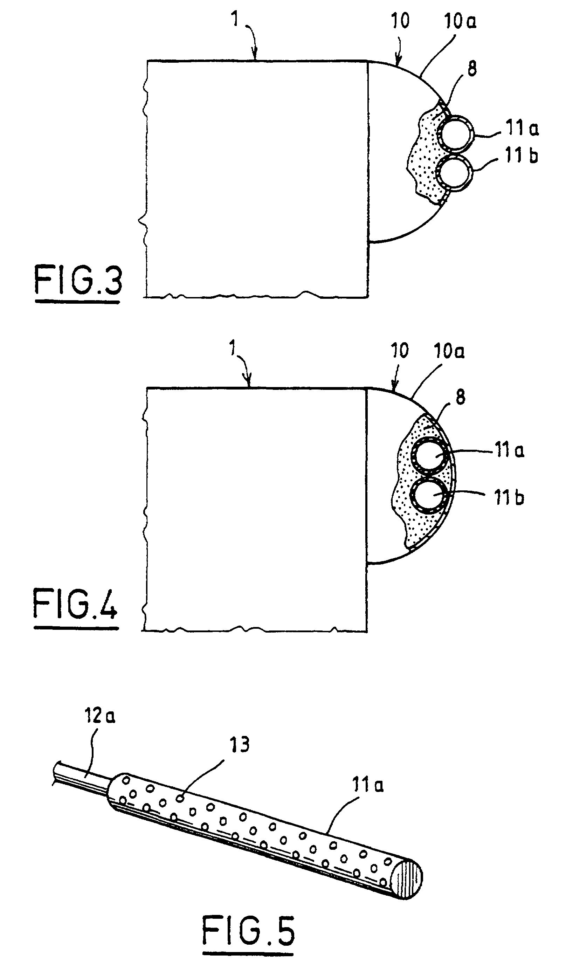

Ainsi que représenté à la Fig. 5, chaque rampe d'injection 11a et 11b comporte au moins une rangée longitudinale d'orifices 13 débouchant dans le collecteur 10 et dirigés vers la zone d'entrée 5a du premier circuit a.

Les rampes d'injection 11a et 11b sont formées par des tubes de même diamètre ou de diamètres différents selon la nature du composant à injecter dans le collecteur 10.

D'autre part, les orifices 13 sont répartis selon des génératrices et sont de dimensions calibrées pouvant varier en dimension et en espacement les uns par rapport aux autres.

Selon un premier mode de réalisation représenté à la Fig. 3, les rampes d'injection 11a et 11b sont disposées à la périphérie du collecteur 10.

Dans ce cas, les rampes d'injection 11a et 11b sont fixées par exemple par soudage sur la paroi centrale 10a du collecteur 10 de telle manière que les orifices 13 débouchent à l'intérieur du collecteur 10.

Selon un second mode de réalisation représenté à la Fig.4, les rampes d'injection 11a et 11b sont disposées à l'intérieur du collecteur 10 et dans ce cas ces rampes d'injection 11a et 11b sont fixées sur les parois latérales 10b dudit collecteur 10.

Pour cela, les rampes d'injection 11a et 11b sont fixées sur les parois latérales 10b du collecteur 10 par exemple par soudage ou par emmanchement à force étanche.

Comme représenté à la Fig. 2, les moyens d'évacuation du fluide principal A du premier circuit a, après sa traversée du faisceau de plaques 1, sont formés par un collecteur 14 couvrant la zone de sortie 6a dudit fluide principal A.

Ce collecteur 14 est relié à un conduit 15 de sortie de ce fluide principal A.

Les moyens d'admission du fluide secondaire B dans le second circuit b sont formés par un collecteur 16 couvrant la zone d'entrée 5b et relié à un conduit 17 d'alimentation du fluide secondaire B.

Les moyens d'évacuation du fluide secondaire B après son passage dans le second circuit b du faisceau de plaques 1, sont formés par un collecteur 18 couvrant la zone de sortie 6b et relié à un conduit 19 de sortie dudit fluide secondaire B.

Dans le cas où la circulation du fluide secondaire B est à contre-courant par rapport au fluide principal A, ce fluide secondaire B entre par le conduit 19 dans le collecteur 18, puis traverse le faisceau de plaques 1 par le second circuit b et sort par le collecteur 16 et le conduit 17.

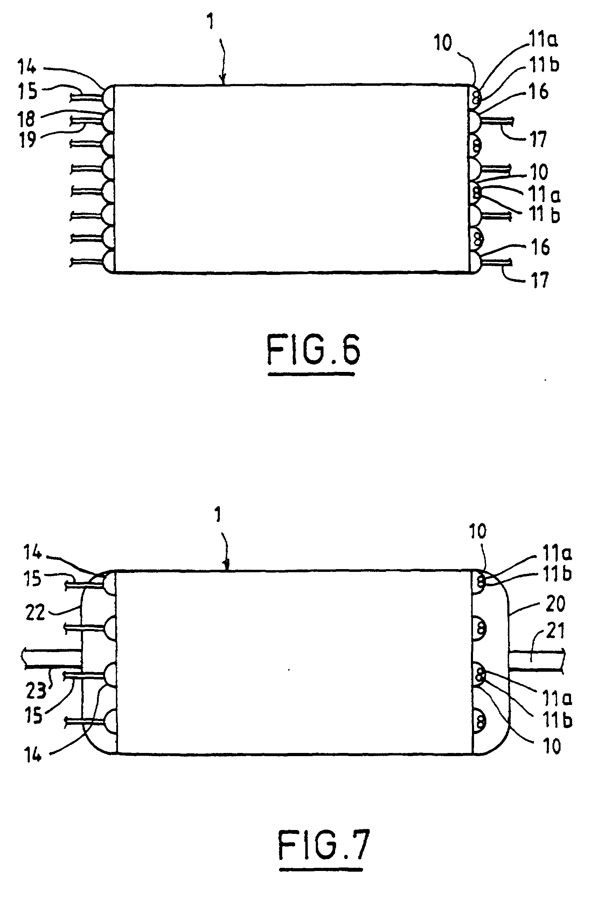

Sur les Figs. 6 et 7, on a représenté un faisceau de plaques 1 de grandes dimensions comportant deux circuits a et b.

Le premier circuit a comporte plusieurs zones d'entrée 5a et plusieurs zones de sortie 6a pour le fluide principal A et le second circuit b comporte plusieurs zones d'entrée 5b et plusieurs zones de sortie 6b pour le fluide secondaire B.

Les zones d'entrée 5a et 5b et de sortie 6a et 6b sont alternées les unes par rapport aux autres.

Selon une variante, les zones d'entrée 5a et 5b et de sortie 6a et 6b sont alternées les unes par rapport aux autres et les zones de sortie 6a du fluide principal A et les zones de sortie 6b du fluide secondaire B sont inversées par rapport aux zones d'entrée 5a dudit fluide principal A et aux zones d'entrée 5b dudit fluide secondaire B.

Ainsi, à une extrémité du faisceau de plaques 1 et par exemple de haut en bas, on a une zone d'entrée 5a du fluide principal A et une zone d'entrée 5b du fluide secondaire B et ainsi de suite et à l'autre extrémité du faisceau de plaques 1 et par exemple de haut en bas, on a une zone de sortie 6b du fluide secondaire B et une zone de sortie 6a du fluide principal et ainsi de suite.

Selon un premier mode de réalisation représenté à la Fig. 6, les moyens d'admission du fluide principal A dans le premier circuit a sont formés, pour chaque zone d'entrée 5a, d'une part, par un collecteur 10 rempli de particules chimiquement neutres 8 et couvrant la zone d'entrée 5a correspondante et, d'autre part, par deux rampes d'injection 11a et 11b pour chaque composant du fluide principal A.

Dans ce cas également, les rampes d'injection 11a et 11b s'étendent sur toute la longueur du collecteur 10 et comportent au moins une rangée longitudinale d'orifices 13 débouchant dans le collecteur 10 et dirigés vers la zone d'entrée 5a correspondante.

Les moyens d'évacuation du fluide principal A après son passage dans le premier circuit a du faisceau de plaques 1 sont formés par des collecteurs 14 couvrant chacun une zone de sortie 6a du premier circuit a.

Chaque collecteur 14 est relié à un conduit 15 de sortie du fluide principal A.

Les moyens d'admission du fluide secondaire B dans le second circuit b du faisceau de plaques 1 sont formés, pour chaque zone d'entrée 5b, par un collecteur 16 couvrant la zone d'entrée 5b correspondante dudit fluide secondaire B.

Chaque collecteur 16 est relié à un conduit 17 d'alimentation de ce fluide secondaire B.

Les moyens d'évacuation du fluide secondaire B après son passage dans le second circuit b du faisceau de plaques 1 sont formés, pour chaque zone de sortie 6b, par un collecteur 18 couvrant la zone de sortie 6b correspondante dudit fluide secondaire B.

Chaque collecteur 18 est relié à un conduit 19 d'évacuation de ce fluide secondaire B.

Pour ce mode de réalisation, la circulation des fluides A et B dans le faisceau de plaques 1 peut également être à contre-courant.

Dans ce cas, le fluide principal A entre par les collecteurs 10 et sort par les collecteurs 14 et le fluide secondaire B entre par les collecteurs 18 et sort par les collecteurs 16.

Selon un second mode de réalisation représenté à la Fig. 7, les moyens d'admission du fluide principal A dans le premier circuit a du faisceau de plaques 1 et les moyens d'évacuation de ce fluide principal A, après son passage dans ledit circuit a sont identiques à ceux du précédent mode de réalisation représenté à la Fig. 6.

Par contre, dans ce mode de réalisation, les moyens d'admission du fluide secondaire B sont formés par un collecteur 20 couvrant l'ensemble des zones d'entrée 5b dudit fluide secondaire B.

Ce collecteur 20 est raccordé à un conduit 21 d'alimentation du fluide secondaire B.

Les moyens d'évacuation du fluide secondaire B, après son passage dans le second circuit b du faisceau de plaques 1, sont formés par un collecteur 22 couvrant l'ensemble des zones de sortie 6b de ce fluide secondaire B.

Ce collecteur 22 est raccordé à un conduit 23 d'évacuation de ce fluide secondaire B.

Selon un autre mode de réalisation, il est possible de combiner les deux modes de réalisation représentés respectivement aux Figs. 6 et 7.

Ainsi, les moyens d'admission du fluide secondaire B dans le circuit b, peuvent être formés par un collecteur couvrant l'ensemble des zones d'entrée 5b et les moyens d'évacuation du fluide secondaire B peuvent être formés par plusieurs collecteurs couvrant chacun une zone de sortie 6b du fluide secondaire B ou inversement.

Dans le cas d'une circulation des fluides A et B à courants croisés, le faisceau de plaques 1 comporte sur l'une de ses faces au moins un collecteur de façon à recouvrir l'ensemble de la face correspondante dudit faisceau de plaques 1 et la seconde face adjacente et perpendiculaire à la première face comporte au moins un collecteur de façon à recouvrir l'ensemble de la seconde face correspondante dudit faisceau de plaques 1.

Dans ce cas également, le ou les collecteurs d'admission du fluide principal A sont munis de rampes d'injection disposées de telle sorte que ces rampes d'injection soient perpendiculaires à la ou aux zones d'entrée.

Pour l'ensemble des modes de réalisation précédemment décrits, les rampes d'injection 11a et 11b peuvent être réalisées chacune sous la forme d'un tube, par exemple cylindrique. Ces tubes peuvent être de même diamètre ou de diamètre différent.

Pour un fluide principal A formé de deux composants, les deux rampes d'injection 11a et 11b sont disposées dans un même plan de préférence perpendiculaire à la zone d'entrée correspondante.

Dans le cas d 'un fluide principal A formé de plus de deux composants, les rampes d'injection peuvent être disposées dans différents plans formant des angles les uns par rapport aux autres.

Les orifices 13 des rampes d'injection 11a et 11b sont calibrés et répartis de façon à obtenir une distribution homogène des composants du fluide principal dans le collecteur 10 correspondant.

Les orifices 13 peuvent avoir des dimensions différentes et la répartition en espacement de ces orifices 13 sur toute la longueur des rampes d'injection peut varier.

Les collecteurs 10 d'admission du fluide principal A sont remplis, de façon dense, de particules 8 solides chimiquement neutres, de petite dimension. Chaque zone d'entrée 5a est recouverte d'une grille, non représentée.

La présence de ces particules permet d'éviter l'explosion lors du mélange des composants du fluide principal, comme c'est le cas pour un fluide principal composé d'air et d'ortho-xylène ou d'air et de toluène.

Ainsi, le réacteur catalytique selon l'invention peut fonctionner avec une plus forte concentration d'ortho-xylène dans l'air sans courir aucun risque d'explosion ce qui permet d'augmenter de façon significative le rendement général de l'installation.

De plus, compte tenu du faible trajet des composants du fluide principal dans les particules, la perte de charge induite est faible.

## Revendications

1. Réacteur catalytique, du type comprenant un faisceau de plaques (1) d'échange thermique délimitant un premier circuit comportant au moins une zone d'entrée (5a) et de sortie (5b) d'un fluide principal (A) formé d'au moins deux composants et un second circuit comportant au moins une zone d'entrée (6a) et de sortie (6b) d'un fluide secondaire, des moyens d'admission (10, 11a, 11b) et d'évacuation (14, 15) du fluide principal (A) et des moyens d'admission (16, 17 ; 20, 21) et d'évacuation (18, 19 ; 22, 23) du fluide secondaire B, **caractérisé en ce que** les moyens d'admission du fluide principal A dans le premier circuit sont formés, d'une part, par au moins un collecteur (10) rempli de particules (8) chimiquement neutres et couvrant ladite zone d'entrée (5a) et, d'autre part, par au moins une rampe d'injection (11a, 11b) pour chaque composant du fluide principal A, s'étendant sur toute la longueur du collecteur (10) et comportant au moins une rangée longitudinale d'orifices (13) débouchant dans le collecteur (10) et dirigés vers ladite zone d'entrée (5a).

2. Réacteur catalytique selon la revendication 1, **caractérisé en ce que** les moyens d'évacuation du fluide principal A du premier circuit sont formés par au moins un collecteur (14) couvrant ladite zone de sortie (5b) dudit fluide principal A.

3. Réacteur catalytique selon la revendication 1, **caractérisé en ce que** la circulation du fluide principal A et du fluide secondaire B dans les circuits correspondants est co-courante.

4. Réacteur catalytique selon la revendication 1, **caractérisé en ce que** la circulation du fluide principale A et du fluide secondaire B dans les circuits correspondants est à contre-courant.

5. Réacteur catalytique selon la revendication 1, **caractérisé en ce que** la circulation du fluide principale A et du fluide secondaire B dans les circuits correspondants est à courants croisés.

6. Réacteur catalytique selon la revendication 1, **caractérisé en ce que** le premier circuit comporte plusieurs zones d'entrée (5a) et de sortie (6a) du fluide principal A et le second circuit comporte plusieurs zones d'entrée (5b) et de sortie (6b) du fluide secondaire B alternées respectivement avec lesdites zones d'entrée (5a) et de sortie (5b) du fluide principal A.

7. Réacteur catalytique selon la revendication 1, **caractérisé en ce que** le premier circuit comporte plusieurs zones d'entrée (5a) et de sortie (6a) du fluide principal A et le second circuit comporte plusieurs zones d'entrée (5b) et de sortie (6b) du fluide secondaire B alternées respectivement avec les zones d'entrée (5a) et de sortie (5b) du fluide principal A, les zones de sortie (6a) du fluide principal A et les zones de sortie (6b) du fluide secondaire B étant inversées par rapport aux zones d'entrée (5a) dudit fluide principal A et aux zones d'entrée (5b) dudit fluide secondaire B.

8. Réacteur catalytique selon l'une quelconque des revendications 1 et 3 à 7, **caractérisé en ce que** les moyens d'admission du fluide principal A dans le premier circuit sont formés, pour chaque zone d'entrée (5a), d'une part, par un collecteur (10) rempli de particules (8) chimiquement neutres et couvrant la zone d'entrée (5a) correspondante et, d'autre part, par au moins une rampe d'injection (11a, 11b) pour chaque composant du fluide principal A s'étendant sur toute la longueur du collecteur (10) et comportant au moins une rangée longitudinale d'orifices (13) débouchant dans le collecteur (10) et dirigés vers ladite zone d'entrée (5a).

9. Réacteur catalytique selon l'une quelconque des revendications 1 et 3 à 7, **caractérisé en ce que** les moyens d'évacuation du fluide principal A sont formés par un collecteur (14) couvrant chaque zone de sortie (5b) du premier circuit.

10. Réacteur catalytique selon l'une quelconque des revendications 1 et 3 à 7, **caractérisé en ce que** les moyens d'admission du fluide secondaire B dans le second circuit sont formés, pour chaque zone d'entrée (5b), par un collecteur (16) couvrant la zone d'entrée (5b) correspondante dudit fluide secondaire B.

11. Réacteur catalytique selon l'une quelconque des revendications 1 et 3 à 7, **caractérisé en ce que** les moyens d'admission du fluide secondaire B dans le second circuit sont formés par un collecteur (20) couvrant l'ensemble des zones d'entrée (5b) dudit fluide secondaire B.

12. Réacteur catalytique selon l'une quelconque des revendications 1 et 3 à 7, **caractérisé en ce que** les moyens d'évacuation du fluide secondaire B du second circuit sont formés, pour chaque zone de sortie (6b), par un collecteur (18) couvrant la zone de sortie (6b) correspondante dudit fluide secondaire B.

13. Réacteur catalytique selon l'une quelconque des revendications 1 et 3 à 7, **caractérisé en ce que** les moyens d'évacuation du fluide secondaire B du second circuit sont formés par un collecteur (22) couvrant l'ensemble des zones de sortie (6b) dudit fluide secondaire B.

14. Réacteur catalytique selon la revendication 1 ou 8, **caractérisé en ce que** les rampes d'injection (11a, 11b) sont disposées à l'intérieur du collecteur (10) correspondant.

15. Réacteur catalytique selon la revendication 1 ou 8, **caractérisé en ce que** les rampes d'injection (11a, 11b) sont disposées à la périphérie du collecteur (10) correspondant.

16. Réacteur catalytique selon la revendication 14 ou 15, **caractérisé en ce que** les rampes d'injection (11a, 11b) sont formées par des tubes de même diamètre ou de diamètres différents.

17. Réacteur catalytique selon la revendication 1 ou 8, **caractérisé en ce que** les orifices (13) des rampes d'injection (11a, 11b) sont de même diamètre ou de diamètres différents.

18. Réacteur catalytique selon la revendication 1 ou 8, **caractérisé en ce que** l'espacement des orifices (13) sur les rampes d'injection (11a, 11b) est constant ou variable.

## Patentansprüche

1. Katalytischer Reaktor des Typs, der ein Bündel (1) aus Wärmetauscherplatten, das einen ersten Kreis, der wenigstens eine Einlaßzone (5a) und eine Auslaßzone (5b) für ein aus wenigstens zwei Komponenten gebildetes Hauptfluid (A) umfaßt, und einen zweiten Kreis, der wenigstens eine Einlaßzone (6a) und eine Auslaßzone (6b) für ein Hilfsfluid umfaßt, begrenzt, Befüllungsmittel (10, 11a, 11b) und Entleerungsmittel (14, 15) für das Hauptfluid (A) sowie Befüllungsmittel (16, 17; 20, 21) und Entleerungsmittel (18, 19; 22, 23) für das Hilfsfluid B umfaßt, **dadurch gekennzeichnet, daß** die Befüllungsmittel für das Hauptfluid A im ersten Kreis einerseits aus wenigstens einem Sammler (10), der mit chemisch neutralen Partikeln (8) gefüllt ist und die Einlaßzone (5a) bedeckt, und andererseits aus einer Einspritzleitung (11a, 11b) für jede Komponente des Hauptfluids A, die sich über die gesamte Länge des Sammlers (10) erstreckt und wenigstens eine longitudinale Reihe von Öffnungen (13) umfaßt, die in den Sammler (10) münden und zur Einlaßzone (5a) gerichtet sind, gebildet sind.

2. Katalytischer Reaktor nach Anspruch 1, **dadurch gekennzeichnet, daß** die Entleerungsmittel für das Hauptfluid A des ersten Kreises durch wenigstens einen Sammler (14) gebildet sind, der die Auslaßzone (5b) für das Hauptfluid A bedeckt.

3. Katalytischer Reaktor nach Anspruch 1, **dadurch gekennzeichnet, daß** die Zirkulation des Hauptfluids A und des Hilfsfluids B in den entsprechenden Kreisen gleichläufig ist.

4. Katalytischer Reaktor nach Anspruch 1, **dadurch gekennzeichnet, daß** die Zirkulation des Hauptfluids A und des Hilfsfluids B in den entsprechenden Kreisen gegenläufig ist.

5. Katalytischer Reaktor nach Anspruch 1, **dadurch gekennzeichnet, daß** die Zirkulation des Hauptfluids A und des Hilfsfluids B in den entsprechenden Kreisen über Kreuz erfolgt.

6. Katalytischer Reaktor nach Anspruch 1, **dadurch gekennzeichnet, daß** der erste Kreis mehrere Einlaßzonen (5a) und mehrere Auslaßzonen (6a) für das Hauptfluid A umfaßt und der zweite Kreis mehrere Einlaßzonen (5b) und mehrere Auslaßzonen (6b) für das Hilfsfluid B, die mit den entsprechenden Einlaßzonen (5a) und Auslaßzonen (5b) für das Hauptfluid A abwechseln, umfaßt.

7. Katalytischer Reaktor nach Anspruch 1, **dadurch gekennzeichnet, daß** der erste Kreis mehrere Einlaßzonen (5a) und mehrere Auslaßzonen (6a) für das Hauptfluid A umfaßt und der zweite Kreis mehrere Einlaßzonen (5b) und Auslaßzonen (6b) für das Hilfsfluid B, die mit den entsprechenden Einlaßzonen (5a) und Auslaßzonen (5b) des Hauptfluids A abwechseln, umfaßt, wobei die Auslaßzonen (6a) für das Hauptfluid A und die Auslaßzonen (6b) für das Hilfsfluid B mit den Einlaßzonen (5a) für das Hauptfluid A und mit den Einlaßzonen (5b) für das Hilfsfluid B vertauscht sind.

8. Katalytischer Reaktor nach einem der Ansprüche 1 und 3 bis 7, **dadurch gekennzeichnet, daß** die Befüllungsmittel für das Hauptfluid A im ersten Kreis für jede Einlaßzone (5a) einerseits aus einem Sammler (10), der mit chemisch neutralen Partikeln (8) gefüllt ist und die entsprechende Einlaßzone (5a) abdeckt, und andererseits aus wenigstens einer Einspritzleitung (11a, 11b) für jede Komponente des Hauptfluids A, die sich über die gesamte Länge des Sammlers (10) erstreckt und wenigstens eine longitudinalen Reihe von Öffnungen (13), die in den Sammler (10) münden und zur Einlaßzone (5a) gerichtet sind, gebildet sind.

9. Katalytischer Reaktor nach einem der Ansprüche 1 und 3 bis 7 **dadurch gekennzeichnet daß** die Entleerungsmittel für das Hauptfluid A durch einen Sammler (14) gebildet sind, der jede Auslaßzone (5b) des ersten Kreises abdeckt.

10. Katalytischer Reaktor nach einem der Ansprüche 1 und 3 bis 7, **dadurch gekennzeichnet, daß** die Befüllungsmittel für das Hilfsfluid B im zweiten Kreis für jede Einlaßzone (5b) durch einen Sammler (16) gebildet sind, der die entsprechende Einlaßzone (5b) für das Hilfsfluid B abdeckt.

11. Katalytischer Reaktor nach einem der Ansprüche 1 und 3 bis 7, **dadurch gekennzeichnet, daß** die Befüllungsmittel für das Hilfsfluid B im zweiten Kreis durch einen Sammler (20) gebildet sind, der alle Einlaßzonen (5b) für das Hilfsfluid B abdeckt.

12. Katalytischer Reaktor nach einem der Ansprüche 1 und 3 bis 7, **dadurch gekennzeichnet, daß** die Entleerungsmittel für das Hilfsfluid B des zweiten Kreises für jede Auslaßzone (6b) durch einen Sammler (18) gebildet sind, der die entsprechende Auslaßzone (6b) für das Hilfsfluid B abdeckt.

13. Katalytischer Reaktor nach einem der Ansprüche 1 und 3 bis 7, **dadurch gekennzeichnet, daß** die Entleerungsmittel für das Hilfsfluid B des zweiten Kreises durch einen Sammler (22) gebildet sind, der alle Auslaßzonen (6b) für das Hilfsfluid B abdeckt.

14. Katalytischer Reaktor nach Anspruch 1 oder 8, **dadurch gekennzeichnet, daß** die Einspritzleitungen (11a, 11b) innerhalb des entsprechenden Sammlers (10) angeordnet sind.

15. Katalytischer Reaktor nach Anspruch 1 oder 8, **dadurch gekennzeichnet, daß** die Einspritzleitungen (11a, 11b) am Umfang des entsprechenden Sammlers (10) angeordnet sind.

16. Katalytischer Reaktor nach Anspruch 14 oder 15, **dadurch gekennzeichnet, daß** die Einspritzleitungen (11a, 11b) durch Rohre mit gleichem Durchmesser oder mit unterschiedlichen Durchmessern gebildet sind.

17. Katalytische Reaktor nach Anspruch 1 oder 8, **dadurch gekennzeichnet, daß** die Öffnungen (13) der Einspritzleitungen (11a, 11b) gleichen Durchmesser oder unterschiedliche Durchmesser besitzen.

18. Katalytischer Reaktor nach Anspruch 1 oder 8, **dadurch gekennzeichnet, daß** der Abstand der Öffnungen (13) in den Einspritzleitungen (11a, 11b) konstant oder veränderlich ist.

## Claims

1. Catalytic reactor of the type comprising a bundle of heat exchange plates (1), which delimit a first circuit comprising at least one inlet zone (5a) and outlet zone (5b) for a principal fluid (A), which circuit is formed from at least two components, and a second circuit comprising at least one inlet zone (6a) and outlet zone (6b) for a secondary fluid, inlet means (10, 11a, 11b) and outlet means (14, 15) for the principal fluid (A) and inlet means (16, 17; 20, 21) and outlet means (18, 19; 22, 23) for the secondary fluid B, **characterised in that** the inlet means for the principal fluid A in the first circuit are formed on the one hand by at least one collector (10), which is filled with chemically indifferent particles (8) and covers said inlet zone (5a), and on the other hand by at least one injection ramp (11a, 11b) for each component of the principal fluid A, which ramp extends over the entire length of the collector (10) and comprises at least one longitudinal row of orifices (13), which open into the collector (10) and are directed towards said inlet zone (5a).

2. , Catalytic reactor according to claim 1, **characterised in that** the outlet means for the principal fluid A of the first circuit are formed by at least one collector (14) which covers said outlet zone (5b) of said principal fluid A.

3. Catalytic reactor according to claim 1, **characterised in that** the circulation of the principal fluid A and of the secondary fluid B in the corresponding circuits is parallel flow.

4. Catalytic reactor according to claim 1, **characterised in that** the circulation of the principal fluid A and of the secondary fluid B in the corresponding circuits is counterflow.

5. Catalytic reactor according to claim 1, **characterised in that** the circulation of the principal fluid A and of the secondary fluid B in the corresponding circuits is crossflow.

6. Catalytic reactor according to claim 1, **characterised in that** the first circuit comprises a plurality of inlet zones (5a) and outlet zones (6a) for the principal fluid A and the second circuit comprises a plurality of inlet zones (5b) and outlet zones (6b) for the secondary fluid B, which zones alternate respectively with said inlet zones (5a) and outlet zones (5b) for the principal fluid A.

7. Catalytic reactor according to claim 1, **characterised in that** the first circuit comprises a plurality of inlet zones (5a) and outlet zones (6a) for the principal fluid A and the second circuit comprises a plurality of inlet zones (5b) and outlet zones (6b) for the secondary fluid B, which zones alternate respectively with the inlet zones (5a) and outlet zones (5b) for the principal fluid A, the outlet zones (6a) for the principal fluid A and the outlet zones (6b) for the secondary fluid B being reversed relative to the inlet zones (5a) of said principal fluid A and relative to the inlet zones (5b) of said secondary fluid B.

8. Catalytic reactor according to any of the claims 1 and 3 to 7, **characterised in that** the inlet means for the principal fluid A in the first circuit are formed, for each inlet zone (5a), on the one hand by a collector (10), which is filled with chemically indifferent particles (8) and covers the corresponding inlet zone (5a), and on the other hand by at least one injection ramp (11a, 11b) for each component of the principal fluid A, which ramp extends over the entire length of the collector (10) and comprises at least one longitudinal row of orifices (13), which open into the collector (10) and are directed towards said inlet zone (5a).

9. Catalytic reactor according to any of the claims 1 and 3 to 7, **characterised in that** the outlet means for the principal fluid A are formed by a collector (14) which covers each outlet zone (5b) of the first circuit.

10. Catalytic reactor according to any of the claims 1 and 3 to 7, **characterised in that** the inlet means for the secondary fluid B in the second circuit are formed, for each inlet zone (5b), by a collector (16), which covers the corresponding inlet zone (5b) of said secondary fluid B.

11. Catalytic reactor according to any of the claims 1 and 3 to 7, **characterised in that** the inlet means for the secondary fluid B in the second circuit are formed by a collector (20), which covers the entirety of the inlet zones (5b) of said secondary fluid B.

12. Catalytic reactor according to any of the claims 1 and 3 to 7, **characterised in that** the outlet means for the secondary fluid B of the second circuit are formed, for each outlet zone (6b), by a collector (18), which covers the corresponding outlet zone (6b) of said secondary fluid B.

13. Catalytic reactor according to any of the claims 1 and 3 to 7, **characterised in that** the outlet means for the secondary fluid B of the second circuit are formed by a collector (22), which covers the entirety of the outlet zones (6b) of said secondary fluid B.

14. Catalytic reactor according to claim 1 or 8, **characterised in that** the injection ramps (11a, 11b) are disposed in the interior of the corresponding collector (10).

15. Catalytic reactor according to claim 1 or 8, **characterised in that** the injection ramps (11a, 11b) are disposed on the periphery of the corresponding collector (10).

16. Catalytic reactor according to claim 14 or 15, **characterised in that** the injection ramps (11a, 11b) are formed by tubes of the same diameter or of different diameters.

17. Catalytic reactor according to claim 1 or 8, **characterised in that** the orifices (13) of the injection ramps (11a, 11b) are of the same diameter or of different diameters.

18. Catalytic reactor according to claim 1 or 8, **characterised in that** the spacing of the orifices (13) on the injection ramps (11a, 11b) is constant or variable.
